# EUROPEAN PATENT APPLICATION

(11) **EP 4 841 442 A1**
(43) Date of publication of application: **18.11.2026**
(21) Application number: 24921401.6
(22) Date of filing: 30.08.2024
(51) Int. Cl.: G06F 9/50

(54) **AI MODEL INFERENCE METHOD AND APPARATUS, AND RELATED DEVICE**

(30) Priority: 02.02.2024 CN 202410156724
(71) Applicant: Huawei Technologies Co., Ltd., Shenzhen, Guangdong 518129 (CN)
(72) Inventor: WANG, Junsong, Shenzhen, Guangdong 518129 (CN); XU, Xiaoxin, Shenzhen, Guangdong 518129 (CN); QU, Zheng, Shenzhen, Guangdong 518129 (CN)
(74) Representative: Huawei European IPR
(86) International application number: PCT/CN2024/115765
(87) International publication number: WO 2025/161376

(57) **Abstract**

An AI model inference method and apparatus, and a related device are provided, relating to the field of artificial intelligence technologies. Iterative inference is performed by using an AI model and obtained input data, to obtain an inference result, where a processing module in the AI model corresponds to a first physical storage area indicated by a first virtual address space, and the first physical storage area is used to store a KV generated by the processing module in an iterative inference process. When the first physical storage area is insufficient to continue to store a KV generated when the processing module performs data processing in an N^{th} inference process, a second physical storage area indicated by a second virtual address space is allocated to the processing module, to store the KV. The second virtual address space and the first virtual address space are contiguous. In this way, KVs generated by the processing module are stored in a manner of on-demand allocation of physical storage areas, so that utilization of physical storage areas can be improved. In addition, an operator in the processing module does not need to have a capability of concatenating the KVs in a virtual address space.

## Description

This application claims priority to Chinese Patent Application No. 202410156724.9, filed with the China National Intellectual Property Administration on February 2, 2024 and entitled "AI MODEL INFERENCE METHOD AND APPARATUS, AND RELATED DEVICE", which is incorporated herein by reference in its entirety.

### TECHNICAL FIELD

This application relates to the field of artificial intelligence technologies, and in particular, to an AI model inference method and apparatus, and a related device.

### BACKGROUND

With the development of artificial intelligence (Artificial Intelligence, AI) technologies, a parameter scale of an AI model is increasing large, for example, reaching a 100-billion level. This makes inference performance of an AI model an important factor that affects promotion of the AI model. In some application scenarios, an AI model typically performs a plurality of inference processes when executing an inference task. The AI model outputs an element after each inference, and the element may also be referred to as a token. In addition, the element output by the AI model in each inference is concatenated with an element serving as an input of the AI model in a current inference process, and a concatenated result is used as an input for a next inference of the AI model, and so forth, until the inference task is completed.

Generally, a key-value cache (key-value cache, KV cache) technology can be used to optimize inference performance of an AI model. The KV cache technology is a technology that improves the inference performance of the AI model by trading space for time without affecting computing accuracy of the AI model. Specifically, during an AI model inference process, generated key values (key value, KV) are cached, so that the KVs can be directly read for computing subsequently, without being re-computed.

Currently, in a process of executing an inference task by an AI model, a physical storage area with a fixed size is usually allocated to each network layer of the AI model. The physical storage area is used to cache KVs generated by the network layer during each inference. Since there may be differences in quantities of inferences performed by the AI model for executing different inference tasks, the size of the physical storage area allocated to each network layer is usually a maximum size, and the maximum size is determined based on a maximum quantity of inferences that may be performed by the AI model. However, in most cases, a quantity of inferences performed in a process of executing an inference task by the AI model is usually less than the maximum quantity of inferences. This causes the physical storage area allocated to each network layer to be typically excessively large, and there are often many areas where no key values are stored, causing a severe waste of storage resources and a large quantity of generated resource fragments.

### SUMMARY

This application provides an AI model inference method, to alleviate a problem of a waste of physical storage resources and reduce resource fragments. In addition, this application further provides an AI model inference apparatus, a compute device, a computer-readable storage medium, and a computer program product.

According to a first aspect, this application provides an AI model inference method. The method may be executed by a corresponding AI model inference apparatus. Specifically, the AI model inference apparatus obtains input data, where the input data may be text data, image data, or the like. In addition, the AI model inference apparatus performs iterative inference by using the AI model and the input data, to obtain an inference result, where the AI model may output one token each inference, and the inference result may be a result of concatenating a plurality of tokens output by the AI model during iterative inference. The AI model includes one or more processing modules, and each processing module may be, for example, one network layer of the AI model or one attention head that is in the network layer. The processing module in the AI model corresponds to a first physical storage area indicated by a first virtual address space, and the first physical storage area is used to store a KV (key value) generated by the processing module when the AI model performs iterative inference. In an N^{th} inference process of iterative inference (the Nth inference process is used as an example, and N is a positive integer), the processing module in the AI model performs data processing, for example, performs computing based on the input data, and outputs data obtained through computing to a next processing module for processing. In addition, when performing data processing, the processing module generates a KV in the Nth inference process. Because the first physical storage area is allocated to the processing module, the processing module may store a newly generated KV in the first physical storage area. However, when the allocated first physical storage area is insufficient to continue to store the KV generated by the processing module in the N^{th} inference process, a second physical storage area indicated by a second virtual address space is allocated to the processing module, and the KV generated in the N^{th} inference process is stored into the second physical storage area based on the second virtual address space. The second virtual address space and the first virtual address space are contiguous.

In a process of iterative inference of the AI model, the AI model inference apparatus does not pre-allocate a physical storage area with a fixed length to the processing module to store a KV generated in each inference process, but dynamically allocates a new physical storage area (to be specific, the second physical storage area) to the processing module when the allocated storage area (to be specific, the first physical storage area) is insufficient to continue to store a newly generated KV, and stores the newly generated KV in the dynamically allocated new physical storage area. In this way, the AI model inference apparatus stores, in a manner of on-demand allocation of physical storage areas, KVs generated in a plurality of inference processes, so that a problem of a waste of storage resources caused by allocating the physical storage area with the fixed length to the processing module can be effectively alleviated, thereby improving utilization of the physical storage area and resolving a problem of resource fragments of the physical storage area. In addition, because the first virtual address space and the second virtual address space that store the KVs are contiguous, when reading KVs in different physical storage areas, an operator (for example, an attention operator and a variant thereof) in the processing module does not need to concatenate the read KVs in a virtual address space (to be specific, concatenate the key values in a generation order of the key values). Therefore, the operator in the processing module is not required to have a capability of concatenating the KVs in the virtual address space, so that this solution can be adapted to various variant operators in the AI model, thereby improving generalization for operators.

In a possible implementation, the AI model inference apparatus may further allocate a target virtual address space of a fixed size to the processing module before performing iterative inference by using the AI model, where the target virtual address space includes the first virtual address space and the second virtual address space that are contiguous in virtual addresses. When allocating the second physical storage area to the processing module, the AI model inference apparatus specifically determines the second physical storage area to be allocated, and then establishes a mapping between the second virtual address space and the second physical storage area. In this way, the AI model inference apparatus dynamically allocates the physical storage area to the processing module in a manner of establishing the mapping between the second physical storage area and the allocated second virtual address space, thereby improving utilization of the physical storage area and resolving a problem of resource fragments of the physical storage area.

In a possible implementation, when determining the second physical storage area, the AI model inference apparatus may specifically select the second physical storage area from a plurality of available physical storage areas included in a storage resource pool, where all the plurality of physical storage areas have a same size. For example, the size of each physical storage area is 2 megabits. In this way, the AI model inference apparatus may dynamically select and allocate the physical storage area from the storage resource pool to the processing module, thereby improving utilization of the physical storage area in the storage resource pool.

In a possible implementation, after the AI model completes iterative inference, the AI model inference apparatus releases the plurality of physical storage areas allocated to the processing module in a process in which the AI model performs iterative inference, where the plurality of physical storage areas include the first physical storage area and the second physical storage area. In this way, after iterative inference of the AI model is completed, the allocated physical storage area is released, so that the physical storage area can be recycled, and the recycled physical storage area is used to meet a requirement in a next iterative inference process of the AI model, thereby implementing recycling of a physical storage resource.

In a possible implementation, when determining whether the first physical storage area is insufficient to continue to store a KV, the AI model inference apparatus may specifically determine whether a virtual address used to store the KV generated by the processing module in the N^{th} inference process is mapped to a physical address, and when the virtual address is not mapped to the physical address, determine that the first physical storage area is insufficient to continue to store the KV generated in the N^{th} inference process; or the AI model inference apparatus may detect whether the first physical storage area has a remaining storage space, and when the first physical storage area does not have the remaining storage space, determine that the first physical storage area is insufficient to continue to store the KV generated in the N^{th} inference process; or the AI model inference apparatus may detect whether a remaining quantity of KVs that can be stored in the first physical storage area is zero, and when the quantity of the remaining KVs that can be stored is zero, determine that the first physical storage area is insufficient to continue to store the KV generated in the N^{th} inference process.

In a possible implementation, the processing module includes M (M is a positive integer greater than 1) processing sub-modules, the first virtual address space includes M first address sub-spaces, a physical storage area indicated by each of the M first address sub-spaces is used to store a KV generated by one processing sub-module, and physical storage areas indicated by different first address sub-spaces are used to store KVs generated by different processing sub-modules. In this way, when the AI model inference apparatus invokes an interface to read the KVs separately generated by a plurality of processing sub-modules, because the plurality of processing sub-modules may share a same physical storage area to store the KVs, the AI model inference apparatus needs to invoke the interface only once to obtain the KVs that are separately generated by the plurality of processing sub-modules and that are in the physical storage area. This can effectively reduce a quantity of interface invocations performed by the AI model inference apparatus, that is, reduce overheads generated when the AI model inference apparatus invokes an interface.

In a possible implementation, after allocating the second physical storage area to the processing module, the AI model inference apparatus may further evenly divide the first virtual address space and the second virtual address space into M second address sub-spaces, where each of the M second address sub-spaces is used to store a KV generated by one processing sub-module, and different second address sub-spaces are used to store KVs generated by different processing sub-modules. In this way, after a new physical storage area is allocated to the processing module, the allocated physical storage area may be evenly re-divided, so that virtual addresses of the KVs generated by each processing sub-module are contiguous. In this way, when reading the KVs in different physical storage areas, an operator in the processing sub-module does not need to concatenate the read KVs in the virtual address space, so that this solution can be adapted to various variant operators in the AI model, and generalization for operators can be improved.

In a possible implementation, the processing module includes a plurality of network layers of the AI model; or the processing module includes one network layer of the AI model; or the processing module includes a plurality of attention heads that are in one network in the AI model; or the processing module includes one attention head that is in the AI model.

According to a second aspect, this application provides an AI model inference apparatus. The AI model inference apparatus includes: an inference unit, configured to: obtain input data; and perform iterative inference by using the AI model and the input data, to obtain an inference result, where the AI model includes a processing module, the processing module corresponds to a first physical storage area indicated by a first virtual address space, and the first physical storage area is used to store a key value KV generated by the processing module when the AI model performs iterative inference; and the processing module performs data processing in an N^{th} inference process, to generate a KV in the N^{th} inference process; and an allocation unit, configured to: when the first physical storage area is insufficient to continue to store the KV generated by the processing module in the N^{th} inference process, allocate, to the processing module, a second physical storage area indicated by a second virtual address space, where the second virtual address space and the first virtual address space are contiguous, and N is a positive integer. The inference unit is further configured to store, in the second physical storage area based on the second virtual address space, the KV generated in the N^{th} inference process.

In a possible implementation, the allocation unit is further configured to allocate a target virtual address space of a fixed size to the processing module before iterative inference is performed by using the AI model, where the target virtual address space includes the first virtual address space and the second virtual address space that are contiguous in virtual addresses; and the allocation unit is configured to: determine the second physical storage area; and establish a mapping between the second virtual address space and the second physical storage area.

In a possible implementation, the allocation unit is configured to select the second physical storage area from a plurality of available physical storage areas included in a storage resource pool, where all the plurality of physical storage areas have a same size.

In a possible implementation, the allocation unit is further configured to: after the AI model completes iterative inference, release the plurality of physical storage areas allocated to the processing module in a process in which the AI model performs iterative inference, where the plurality of physical storage areas include the first physical storage area and the second physical storage area.

In a possible implementation, the allocation unit is further configured to: determine whether a virtual address used to store the KV generated by the processing module in the N^{th} inference process is mapped to a physical address, and when the virtual address is not mapped to the physical address, determine that the first physical storage area is insufficient to continue to store the KV generated in the N^{th} inference process; or detect whether the first physical storage area has a remaining storage space, and when the first physical storage area does not have the remaining storage space, determine that the first physical storage area is insufficient to continue to store the KV generated in the N^{th} inference process; or detect whether a remaining quantity of KVs that can be stored in the first physical storage area is zero, and when the quantity of the remaining KVs that can be stored is zero, determine that the first physical storage area is insufficient to continue to store the KV generated in the N^{th} inference process.

In a possible implementation, the processing module includes M processing sub-modules, the first virtual address space includes M first address sub-spaces, a physical storage area indicated by each of the M first address sub-spaces is used to store a KV generated by one processing sub-module, physical storage areas indicated by different first address sub-spaces are used to store KVs generated by different processing sub-modules, and M is a positive integer greater than 1.

In a possible implementation, the allocation unit is further configured to: after allocating the second physical storage area to the processing module, evenly divide the first virtual address space and the second virtual address space into M second address sub-spaces, where each of the M second address sub-spaces is used to store a KV generated by one processing sub-module, and different second address sub-spaces are used to store KVs generated by different processing sub-modules.

In a possible implementation, the processing module includes a plurality of network layers of the AI model; or the processing module includes one network layer of the AI model; or the processing module includes a plurality of attention heads that are in one network in the AI model; or the processing module includes one attention head that is in the AI model.

It should be noted that the AI model inference apparatus according to the second aspect corresponds to the AI model inference method according to the first aspect. Therefore, for technical effects of the second aspect and any one of the implementations of the second aspect, refer to technical effects of the first aspect or a corresponding implementation of the first aspect.

According to a third aspect, this application provides a compute device. The compute device includes a processor and a memory, the memory stores program instructions, and the processor runs the program instructions to perform the AI model inference apparatus method according to the first aspect or any one of the possible implementations of the first aspect.

According to a fourth aspect, this application provides a computer-readable storage medium. The computer-readable storage medium stores instructions. When the instructions are run on a compute device, the compute device is caused to perform an operation step in the AI model inference method according to the first aspect or any one of the implementations of the first aspect.

According to a fifth aspect, this application provides a computer program product including instructions. When the instructions are run on a compute device, the compute device is caused to perform an operation step in the AI model inference method according to the first aspect or any one of the implementations of the first aspect.

In this application, the implementations provided in the foregoing aspects may be further combined to provide more implementations.

### BRIEF DESCRIPTION OF DRAWINGS

FIG. 1 is a diagram of an example of executing an inference task by an AI model;
FIG. 2 is a schematic flowchart of an AI model inference method according to this application;
FIG. 3 is a diagram of dynamically allocating a physical storage area to store a KV according to this application;
FIG. 4 is a schematic flowchart of another AI model inference method according to this application;
FIG. 5 is a diagram of storing KVs generated by a plurality of processing sub-modules in an aggregated manner according to this application;
FIG. 6 is a diagram of dynamically allocating a physical storage area and adjusting an address sub-space according to this application;
FIG. 7 is a diagram of a structure of an example of an AI model inference apparatus according to this application; and
FIG. 8 is a diagram of a hardware structure of a compute device according to this application.

### DESCRIPTION OF EMBODIMENTS

To make the objectives, features, and advantages of this application clearer and more comprehensible, the following describes various non-limitative implementations in embodiments of this application with reference to the accompanying drawings by using examples. Apparently, the described embodiments are some rather than all of embodiments of this application. All other embodiments obtained based on the foregoing content in embodiments of this application shall fall within the protection scope of this application.

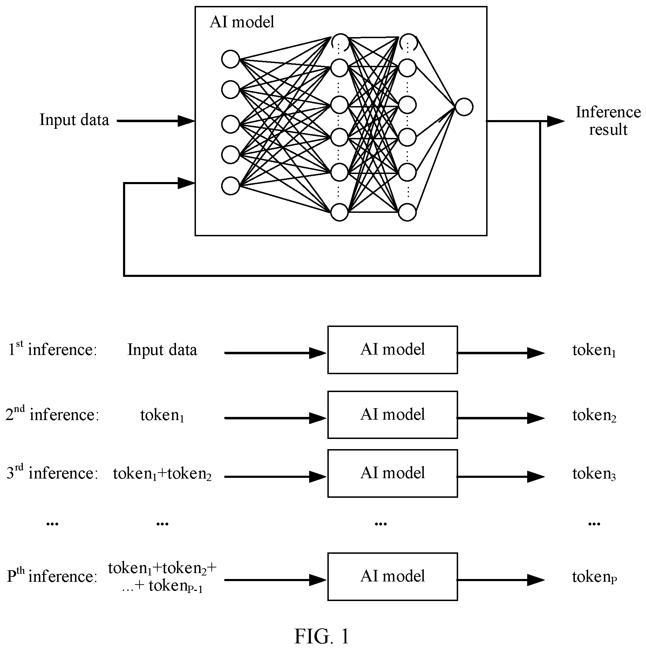

FIG. 1 is a diagram of an example of executing an inference task by an AI model. As shown in FIG. 1, when executing the inference task, the AI model performs iterative inference based on input data. In FIG. 1, an example of executing P inference processes is used for description, where P is a positive integer greater than 1. During actual application, the AI model may be deployed in an AI model inference apparatus, so that the AI model inference apparatus can run the AI model. For example, the AI model inference apparatus may include one compute device, where for example, the AI model inference apparatus may be implemented via one server. Alternatively, the AI model inference apparatus may include a plurality of compute devices, where for example, the AI model inference apparatus may be implemented via a server cluster.

During a 1^{st} inference, the AI model can perform inference based on the input data and output a token₁.

During a 2^{nd} inference, the AI model inference apparatus may use the token₁ as an input of the AI model, so that the AI model may perform inference based on the token₁, and output a token₂. In the 2^{nd} inference process, each network layer of the AI model may store a key (key) 1 and a value (value) 1 generated in the second inference process.

During a 3^{rd} inference, the AI model inference apparatus may concatenate the token₂ and the token₁, to obtain a concatenation result "token₁+token₂", and use the concatenation result as an input of the AI model, so that the AI model may perform inference based on the input "token₁+token₂", and output a token₃. In the third inference process, each network layer of the AI model may not need to repeatedly compute the key 1 and the value 1 (which have been stored in the second inference process) that correspond to the token₁, but store a key 2 and a value 2 that are newly generated for the token₂ in the third inference process.

The rest may be deduced by analogy until a P^{th} inference is performed. The AI model may perform inference based on an input "token₁+token₂+...+token_{P-1}", and output a token_{P} used as an end-of-sentence character. The token_{P} may be, for example, a character "EOS" (end of sentence). In this case, the AI model may determine, based on the token_{P}, that the inference task is completed, and the AI model may output a final inference result "token₁+token₂+...+token_{P-1}".

Before the AI model performs the 1^{st} inference, if the AI model inference apparatus pre-allocates a physical storage area with a maximum size to each network layer based on a maximum quantity Q (Q is a positive integer greater than 1) of inferences that can be performed by the AI model, because a quantity of inferences performed when the AI model executes a single inference task is usually less than Q, a large quantity of areas in the allocated physical storage area are in an idle state, causing a severe resource waste and a large quantity of generated resource fragments. However, if a size of a physical storage area allocated to each network layer is small, the physical storage area may support storage of only some KVs (key values) generated in the inference process, and cannot continue to store a newly generated KV. Consequently, the AI model fails to execute the inference task because the allocated physical storage area is insufficient. For example, the physical storage area may be, for example, a storage area in a memory, or may be a storage area in a storage medium of another type. This is not limited herein.

Based on this, embodiments of this application provide a model inference method, so that when KVs are stored based on sufficient storage resources, a problem of a resource waste of physical storage resources is alleviated and resource fragments generated during KV storage are reduced.

During specific implementation, in a process of performing iterative inference by the AI model, in each inference process, a network layer of the AI model performs data processing and generates a KV. The AI model inference apparatus stores, in a physical storage area 1 that is indicated by a virtual address space 1 and that is allocated to the network layer, the KV generated by the network layer. In an N^{th} inference process (N is a positive integer) of the AI model, the network layer generates a new KV in this inference process. In addition, for the KV newly generated by the network layer, if a remaining available area of the physical storage area 1 can continue to store the newly generated KV, the AI model inference apparatus may store the newly generated KV in the physical storage area 1; or if the physical storage area 1 cannot continue to store the newly generated KV, the AI model inference apparatus allocates a new physical storage area to the network layer, specifically, allocates a physical storage area 2 indicated by a virtual address space 2, and stores the newly generated KV in the newly allocated physical storage area 2. The virtual address space 1 and the virtual address space 2 are contiguous, to be specific, a next address of an end address of the virtual address space 1 is a start address of the virtual address space 2. The rest may be deduced by analogy. The AI model inference apparatus may store, in the foregoing manner and through dynamically allocating physical storage areas, KVs separately generated by the network layer in a plurality of inference processes, until iterative inference is completed.

In the inference process of the AI model, the AI model inference apparatus does not pre-allocate a physical storage area with a fixed length to the network layer to store a KV generated in each inference process, but dynamically allocates a new physical storage area (to be specific, the physical storage area 2) to the network layer when the existing physical storage area (to be specific, the physical storage area 1) is insufficient to continue to store a newly generated KV, and stores the newly generated KV in the dynamically allocated new physical storage area. In this way, in a manner of on-demand allocation of physical storage areas, KVs generated in a plurality of inference processes are stored, so that a problem of a waste of storage resources caused by allocating the physical storage area with the fixed length to the network layer can be effectively alleviated, thereby improving utilization of the physical storage area and reducing storage resource fragments generated in the model inference process.

In addition, because the first virtual address space and the second virtual address space that store the KVs are contiguous, when reading KVs in different physical storage areas, operators (for example, an attention operator and variants thereof) in the network layer do not need to concatenate the read KVs in a virtual address space (to be specific, concatenate the KVs in a generation order of the KVs for corresponding computing subsequently performed on sequentially generated KVs). Therefore, the operator in the network layer is not required to have a capability of concatenating the KVs in the virtual address space, so that this solution can be adapted to various variant operators in the AI model, thereby improving generalization for operators.

For ease of understanding, the following describes embodiments of the model inference method provided in this application with reference to the accompanying drawings.

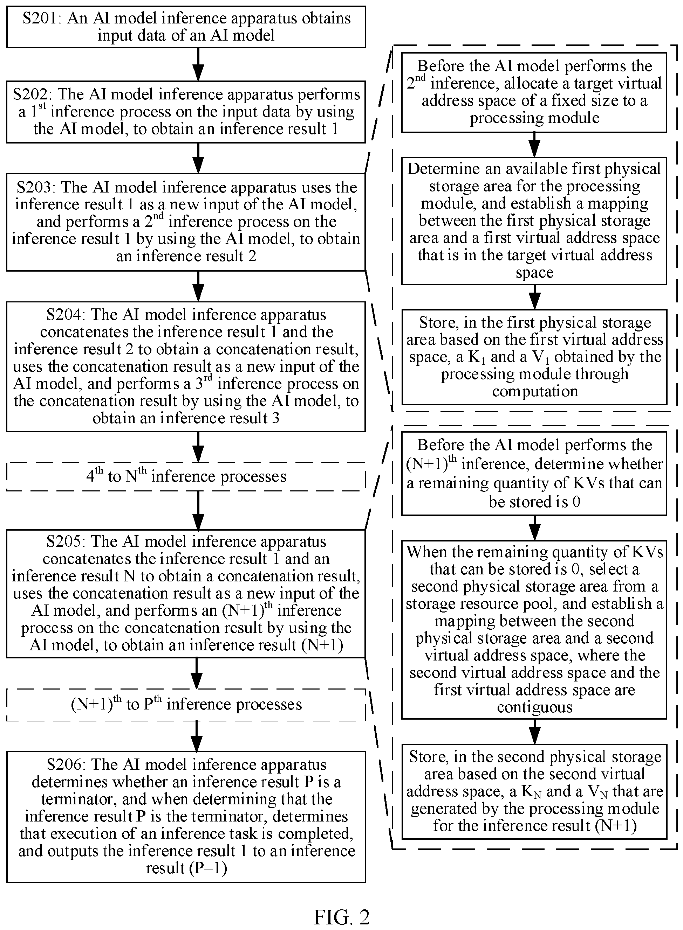

FIG. 2 is a schematic flowchart of a model inference method according to an embodiment of this application. For ease of description, in this embodiment, an example in which P inferences need to be performed when an AI model executes an inference task is used, to describe a process in which an AI model inference apparatus allocates a physical storage area to cache a key value.

As shown in FIG. 2, the model inference method may specifically include the following steps.

S201: The AI model inference apparatus obtains input data of the AI model.

For example, the AI model may be a generative inference model, for example, a large language model (Large Language Model, LLM), and may include a large-scale model parameter, for example, may include hundreds of millions of model parameters. Alternatively, the AI model may be another type of inference model. This is not limited. The AI model may include a plurality of network layers. In addition, in one inference process, the plurality of network layers may sequentially perform corresponding computational processes, and a computational result output by a previous network layer may be used as an input of a subsequent network layer. Each network layer may include one attention head (attention head), or may include a plurality of attention heads, and each attention head is used to perform corresponding attention computing. When a network layer includes a plurality of attention heads, the network layer may aggregate computational results respectively obtained by the plurality of attention heads, to improve spatial resolution of an attention mechanism and reduce a possibility of overfitting.

For example, the input data obtained by the AI model inference apparatus may be data of any type. For example, the input data may be specifically text data, for example, "Please introduce features of a mature apple" input by a user; or the input data may be specifically image data, for example, an image input by the user; or the input data may be audio data, video data, or other data.

In a possible implementation, when running the AI model, the AI model inference apparatus may provide a service, for example, a cloud service for an intelligent dialog. In addition, the AI model inference apparatus may provide a client externally. The client may be, for example, an application running on a user-side device, or may be a web browser. Therefore, when using the service, the user may interact with the AI model inference apparatus via the client. The client may create an inference task based on an operation of the user, and feed back the inference task and data provided by the user to the AI model inference apparatus. Therefore, the AI model inference apparatus may use the data sent by the client as the input data of the AI model, and start to execute the inference task. Correspondingly, after the AI model completes the inference task, the AI model inference apparatus may feed back a finally obtained inference result to the user via the client.

S202: The AI model inference apparatus performs a 1^{st} inference process by using the AI model and the obtained input data, to obtain an inference result 1.

In this embodiment, in a process of executing the inference task, the AI model inference apparatus may perform P inferences by using the AI model, and may integrate inference results output by the AI model in inferences, and use an integrated inference result as a final inference result. For example, assuming that the inference result output by the AI model each time is one token, and the final inference result may be, for example, "token₁+token₂+...+token_{P-1}" shown in FIG. 1.

During the 1^{st} inference, after obtaining the input data, the AI model inference apparatus may perform inference on the obtained input data by using the AI model, and the AI model outputs a corresponding inference result. For ease of differentiation, the corresponding inference result is referred to as the inference result 1 in this embodiment.

For example, the inference result 1 may be one token in the complete inference result finally fed back by the AI model inference apparatus, for example, the token₁ shown in FIG. 1. The token₁ may be, for example, a character, a word, a letter, a number, or a symbol. This is not limited herein.

S203: The AI model inference apparatus uses the inference result 1 as a new input of the AI model, and performs a 2^{nd} inference process on the inference result 1 by using the AI model, to obtain an inference result 2.

For example, in the process in which the AI model performs inference based on the inference result 1, each network layer/attention head in the AI model performs data processing, and specifically, may generate a corresponding KV for the inference result 1, and a K and a V generated by each network layer/attention head may be represented by using a corresponding vector matrix. For ease of differentiation, K₁ and V₁ are used for description in the following. During actual application, each network layer/attention head may further generate a query (query) value, and the query value may also be represented by using a corresponding vector matrix.

In this embodiment, the AI model inference apparatus may store the K₁ and the V₁ generated by each network layer/attention head, so that in each subsequent inference process (to be specific, a 3^{rd} inference to a P^{th} inference), the AI model can directly read the K₁ and the V₁ (used to perform corresponding computing) corresponding to the inference result 1, and repeated computation does not need to be performed to obtain the K₁ and V₁. For ease of description, a processing module is used below to indicate a network layer or an attention head that can generate a KV.

Specifically, as shown in FIG. 2, before the AI model performs the 2^{nd} inference, the AI model inference apparatus may allocate a target virtual address space of a fixed size to each processing module that is in the AI model, and the target virtual address space allocated by the AI model inference apparatus to each processing module may not be mapped to a specific physical storage area. The allocated target virtual address space may include a plurality of contiguous virtual address spaces. For ease of understanding and description, the following uses an example in which the target virtual address space includes a first virtual address space and a second virtual address space for description. The first virtual address space and the second virtual address space are contiguous, that is, a next address of an end address in the first virtual address space is a start address in the second virtual address space. In addition, a size of the target virtual address space may be a maximum size that can be configured by the AI model inference apparatus. For example, the AI model inference apparatus may determine, based on a maximum quantity Q of inferences that can be performed by the AI model, that the size of the target virtual address space is ((Q-1)*Storage space to be occupied for storing a KV generated in a single inference process). Alternatively, a size of the target virtual address space may be configured by technicians, or the like.

An example in which a physical storage area is allocated to one processing module that is in the AI model is used. As shown in FIG. 2, before performing the 2^{nd} inference, the AI model inference apparatus may determine an available first physical storage area for the processing module, and establish a mapping between the first physical storage area and the first virtual address space. In this way, in a process in which the AI model performs the 2^{nd} inference, the AI model inference apparatus may store, in the first physical storage area based on the first virtual address space, the K₁ and the V₁ obtained through computation by the processing module, as shown in FIG. 2.

It should be noted that, if a size of the first physical storage area allocated to the processing module is excessively large, in an entire process of executing the inference task, a large quantity of areas in the first physical storage area are prone to not store data, causing a resource waste and a large quantity of resource fragments. Therefore, the first physical storage area allocated by the AI model inference apparatus to the processing module may be a physical storage area with a small size, for example, may be a physical storage area in a unit of a page (page). The size of the physical storage area may be 1 megabyte (M), 2 M, or the like, and may be set based on an actual application requirement. This is not limited herein.

During actual application, the AI model inference apparatus may pre-create a storage resource pool. The storage resource pool may include a plurality of available physical storage areas, and sizes of the plurality of available physical storage areas may be the same, for example, all the plurality of available physical storage areas are storage blocks (block) of a size of 2 M. In this way, when allocating the first physical storage area to the processing module, the AI model inference apparatus may select one available physical storage area from the plurality of physical storage areas included in the storage resource pool, for example, may perform selection based on a random algorithm, so that the selected physical storage area may be used as the first physical storage area for mapping establishment with the first virtual address space. Further, the AI model inference apparatus may further remove the first physical storage area that has been allocated to the processing module from the storage resource pool, to avoid repeatedly allocating the first physical storage area to another processing module subsequently.

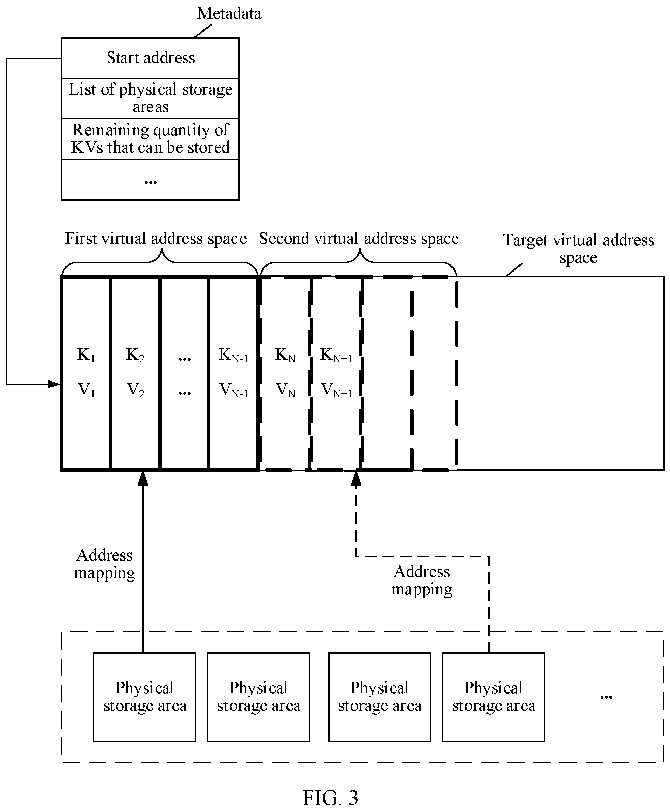

Further, when allocating the target virtual address space to the processing module, the AI model inference apparatus may further create metadata for the target virtual address space. The metadata may include a start address of the target virtual address space. As shown in FIG. 3, the metadata may further include information, for example, the size of the target virtual address space. After the AI model inference apparatus establishes the mapping between the first virtual address space and the first physical storage area, the AI model inference apparatus may update the metadata. Updated metadata may further include a list of physical storage areas that have been mapped, a remaining quantity of KVs that can be stored, and the like. The list of physical storage areas may include information, for example, start addresses and identifiers of the physical storage areas. In addition, before the K₁ and the V₁ are stored, the remaining quantity of KVs that can be stored may be n (n is a positive integer greater than 1). After the K₁ and the V₁ are stored, the AI model inference apparatus may update the quantity, of remaining KVs that can be stored, that is in the metadata to (n-1).

The foregoing process is described by using an example in which the target virtual address space and the physical storage area are allocated to the processing module, and the metadata is created. For another processing module in the AI model, the AI model inference apparatus may perform similar processing on the another processing module in the foregoing manner. Details are not described herein again.

S204: The AI model inference apparatus concatenates the inference result 1 and the inference result 2 to obtain a concatenation result, uses the concatenation result as a new input of the AI model, and performs a 3^{rd} inference process on the concatenation result by using the AI model, to obtain an inference result 3.

Similar to a process in which the AI model performs the 2^{nd} inference, the AI model inference apparatus may continue to use an unused area that is in the allocated first physical storage area, to store a K₂ and a V₂ that are newly generated for the inference result 2 when the processing module performs computing, and update the quantity, of remaining KVs that can be stored, that is in the metadata to (n-2). An order of generating the KVs by the processing module may be indicated by an order of virtual addresses used when the KVs are stored.

By analogy, the AI model inference apparatus may complete N inferences (N is a positive integer) of the AI model in the foregoing manner, to obtain an inference result N. In this case, the KVs stored in the first physical storage area include new KVs generated in the processes of the 2^{nd} inference to an N^{th} inference, that is, the K₁ to a K_{N-1} and the V₁ to a V_{N-1}, as shown in FIG. 3.

In this embodiment, the size of the first physical storage area allocated to the processing module is small, and the first physical storage area may be incapable of storing all KVs generated by the processing module in the process of executing the inference task. In view of this, assuming that after the first physical storage area stores the new KVs generated in the processes from the 2^{nd} inference to the N^{th} inference, the remaining quantity of KVs that can be stored is 0. The following continues to describe processes in which the AI model inference apparatus continues to perform an (N+1)^{th} inference and subsequent inferences by using the AI model after the first physical storage area is completely used.

S205: The AI model inference apparatus concatenates the inference result 1 and the inference result N to obtain a concatenation result, uses the concatenation result as a new input of the AI model, and performs the (N+1)^{th} inference process on the concatenation result by using the AI model, to obtain an inference result (N+1).

Because all storage spaces in the first physical storage area are used to store the KVs separately generated in the first N inference processes, when the AI model further performs the (N+1)^{th} inference, the AI model inference apparatus may allocate a new physical storage area to the processing module, which is referred to as a second physical storage area below.

During specific implementation, as shown in FIG. 2, before the AI model performs the (N+1)^{th} inference, the AI model inference apparatus may determine, based on the metadata corresponding to the target virtual address space, whether the remaining quantity of KVs that can be stored is 0. If the remaining quantity of KVs that can be stored is not 0, the AI model inference apparatus may continue to store a newly generated KV in the first physical storage area that has been mapped to the target virtual address space. If the remaining quantity of KVs that can be stored is 0, it indicates that the first physical storage area has been completely used. In this case, as shown in FIG. 2, the AI model inference apparatus may select a new available physical storage area from the storage resource pool, and establish a mapping between the physical storage area (used as the second physical storage area) and the second virtual address space, to allocate the new physical storage area to the processing module. Then, the AI model inference apparatus may update the metadata of the target virtual address space, including updating a list of physical storage areas that have been mapped and the remaining quantity of KVs that can be stored (to be specific, to a quantity of KVs that can be stored in the second physical storage area).

In this way, as shown in FIG. 2, in a process in which the AI model performs the (N+1)^{th} inference, the AI model inference apparatus may store, in the newly allocated second physical storage area based on the second virtual address space, a K_{N} and a V_{N} that are generated by the processing module for the inference result (N+1). In addition, the AI model inference apparatus may further update the quantity, of remaining KVs that can be stored, that is in the metadata (specifically, to Quantity-1). Then, the AI model inference apparatus may continue to perform an (N+2)^{th} inference process and subsequent inference processes on the AI model.

Similarly, as shown in FIG. 3, in processes of the (N+2)^{th} inference to the P^{th} inference on the AI model, the AI model inference apparatus may continue to use the second physical storage area to store KVs newly generated by the processing module. In addition, when the second physical storage area is completely used, the AI model inference apparatus may continue to allocate a new physical storage area to the processing module in the foregoing manner of dynamically allocating the second physical storage area to the processing module, and store a newly generated KV in the newly allocated physical storage area until the AI model completes the inference task. The following continues to describe a process in which the AI model inference apparatus determines that the AI model completes execution of the inference task. It is assumed that the AI model has completed the P inferences currently, and outputs an inference result P.

It should be noted that in the foregoing implementation, an example in which the AI model inference apparatus determines, depending on whether a quantity of KVs that can be stored in the remaining storage for operations and maintenance is 0, whether the allocated first physical storage area supports storage of a newly generated KV is used for description. In another implementation, the AI model inference apparatus may alternatively determine, in another manner, whether the allocated first physical storage area supports storage of a new KV. Some examples are provided below for description.

Example 1: After the processing module generates a new KV, the AI model inference apparatus may determine a virtual address used to store the new KV, and determine whether the virtual address is mapped to a physical address. If the virtual address is mapped to the physical address (the physical address is a physical address in the first physical storage area), the AI model inference apparatus may store the newly generated KV in a storage location indicated by the physical address. If the virtual address is not mapped to the physical address, it indicates that the first physical storage area has been completely used. In this case, the AI model inference apparatus may determine that the first physical storage area is insufficient to store the KV newly generated by the processing module, and may further dynamically allocate a new physical storage area (to be specific, the foregoing second physical storage area) to the processing module to store the newly generated KV.

Example 2: After the processing module generates a new KV, the AI model inference apparatus may detect whether the first physical storage area has a remaining storage space. When there is the remaining storage space in the first physical storage area, the AI model inference apparatus may continue to use the remaining storage space in the first physical storage area to store the newly generated KV. If there is no remaining storage space in the first physical storage area, it indicates that the first physical storage area has been completely used. In this case, the AI model inference apparatus may determine that the first physical storage area is insufficient to store the KV newly generated by the processing module, and may further dynamically allocate a new physical storage area to the processing module to store the newly generated KV.

S206: The AI model inference apparatus determines whether the inference result P is an end-of-sentence character, and when determining that the inference result P is the end-of-sentence character, determines that execution of the inference task is completed, and outputs the inference result 1 to an inference result (P-1).

During actual application, each time the AI model performs an inference process, the AI model inference apparatus may determine whether an inference result currently output by the AI model is the end-of-sentence character. If the inference result currently output by the AI model is not the end-of-sentence character, the AI model inference apparatus may continue to perform a next inference process by using the AI model. If the inference result currently output by the AI model is the end-of-sentence character, the AI model inference apparatus may output all inference results obtained through AI model inference.

In this way, in a process in which the AI model executes the inference task, the AI model inference apparatus dynamically establishes a mapping between a physical storage area and a virtual address space based on a requirement for storing a KV newly generated by the processing module, to dynamically allocate a physical storage area to the processing module, and avoid a case in which the physical storage area allocated to the processing module is always in a state of not storing data in the entire process. Therefore, utilization of a physical storage resource can be effectively improved, and a quantity of fragments of the physical storage resource can be reduced. In addition, the virtual address space mapped to the physical storage area dynamically allocated by the AI model inference apparatus to the processing module is contiguous, so that when KVs generated by the processing module are read, the KVs sequentially generated by the processing module can be determined based on the contiguous virtual address space. Therefore, a second processing module executes a corresponding operator based on the KVs. The KVs obtained by the processing module through computation may be used as inputs of the operator in the second processing module. In this way, in an AI model inference process, the AI model inference apparatus may not need to modify the operator in the second processing module to determine an order of the KVs generated by the processing module, to improve generalization for operators, and also improve efficiency of performing computing by the second processing module based on the KVs, thereby improving AI model inference efficiency.

Further, after the AI model completes execution of the inference task, the AI model inference apparatus may release a physical storage area allocated to each processing module. The processing module is used as an example, and the AI model inference apparatus may remove a mapping between each physical storage area and a virtual address space based on the metadata of the target virtual address space, and release each physical storage area to the storage resource pool, so that the physical storage area becomes an available physical storage area in the storage resource pool. In addition, the AI model inference apparatus may further update the metadata, including clearing the list, of physical storage areas, that is in the metadata (to indicate that there is no physical storage area currently for mapping), and clearing the quantity, of remaining KVs that can be stored, that is in the metadata (to indicate that a KV cannot be currently stored). When the AI model executes a next inference task, the AI model inference apparatus may re-allocate a physical storage area to the processing module and update metadata.

It should be noted that, in this embodiment, an example in which the AI model performs the inference task for a group of input data is used for description. During actual application, the AI model may perform an inference process for a plurality of groups of input data in parallel, that is, a batch size is greater than 1. For example, the AI model inference apparatus may simultaneously provide a service for a plurality of users based on the AI model, so that the plurality of users may separately provide input data for the AI model inference apparatus via respective clients. In this case, the AI model inference apparatus may create a plurality of inference tasks for the input data provided by different users, and may execute the plurality of inference tasks in parallel by using the AI model. In this process, the AI model inference apparatus may create a plurality of target virtual address spaces for each processing module that is in the AI model, and each target virtual address space corresponds to one inference task. Therefore, in a process of executing each inference task by the AI model, the AI model inference apparatus may dynamically allocate a physical storage area to the processing module by using the process in the embodiment shown in FIG. 2, thereby improving utilization of a physical storage resource and improving generalization for operators in the processing module.

In the embodiment shown in FIG. 2, an example in which the processing module is one network layer or one attention head in the AI model is used for description. In another embodiment, the processing module may alternatively include a plurality of network layers of the AI model, or may be a plurality of attention heads included in one network layer. In this case, KVs generated by the plurality of network layers or the plurality of attention heads may be stored in a same physical storage area, that is, the KVs are aggregated and stored. For example, in a multi-query attention (multi-query attention, MQA) scenario, a plurality of attention heads in a same network layer share a same KV. In this case, the AI model inference apparatus may aggregate and store KVs of a plurality of network layers.

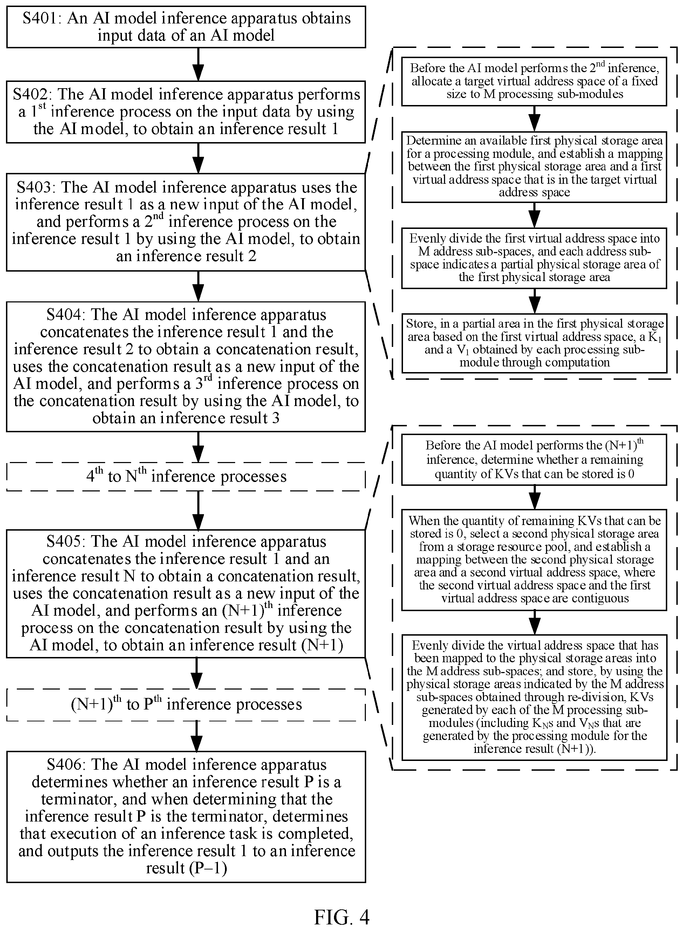

With reference to FIG. 4, the following describes a process in which an AI model inference apparatus dynamically allocates a physical storage area to a processing module in a scenario in which KVs are aggregated and stored.

FIG. 4 is a schematic flowchart of another model inference method. For ease of understanding, this embodiment is described by using an example in which KVs generated by M network layers or M attention heads are aggregated and stored. As shown in FIG. 4, the method may specifically include the following steps.

S401: An AI model inference apparatus obtains input data of an AI model.

S402: The AI model inference apparatus performs a 1^{st} inference process on the obtained input data by using the AI model, to obtain an inference result 1.

For implementations of step S401 and step S402, refer to related descriptions of step S201 and step S202 in the embodiment shown in FIG. 2. Details are not described herein again.

S403: The AI model inference apparatus uses the inference result 1 as a new input of the AI model, and performs a 2^{nd} inference process on the inference result 1 by using the AI model, to obtain an inference result 2.

In this embodiment, as shown in FIG. 4, before the AI model performs the 2^{nd} inference, the AI model inference apparatus may allocate a target virtual address space of a fixed size to each processing module that is in the AI model, and the target virtual address space allocated by the AI model inference apparatus to each processing module may not be mapped to a specific physical storage area. The allocated target virtual address space may include a plurality of contiguous virtual address spaces. In addition, the AI model inference apparatus further creates metadata for the target virtual address space. The metadata may include a start address of the target virtual address space, and may further include other information.

Each processing module may include a plurality of network layers or a plurality of attention heads that are in one network layer. For ease of description, the following uses an example in which the processing module includes M processing sub-modules for description, where M is a positive integer greater than 1, each processing sub-module may be one network layer or one attention head, and KVs generated by each of the M processing sub-modules may be stored in a same physical storage area.

Before performing the 2^{nd} inference, the AI model inference apparatus may determine an available first physical storage area for the processing module from a storage resource pool, and establish a mapping between the first physical storage area and a first virtual address space that is in the target virtual address space. For example, the first physical storage area may be a physical storage area with a small size, for example, may be a physical storage area in a unit of a page. The size of the physical storage area may be 2 M or the like. Because the first physical storage area stores the KVs generated by each of the M processing sub-modules, the AI model inference apparatus may further evenly divide the first virtual address space into M address sub-spaces, and each address sub-space indicates a partial physical storage area of the first physical storage area, as shown in FIG. 4.

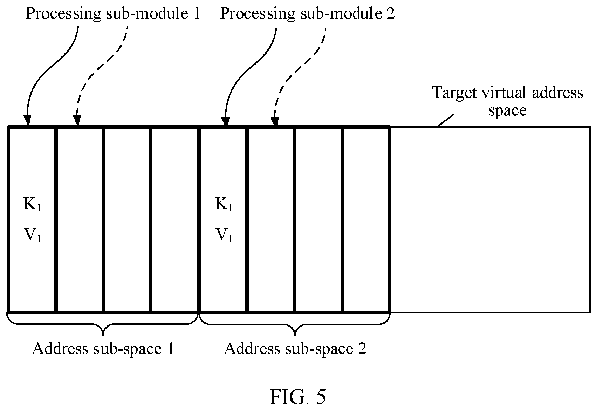

For example, assuming that a value of M is 2, that is, the processing module includes a processing sub-module 1 and a processing sub-module 2, the AI model inference apparatus may evenly divide the first virtual address space into two address sub-spaces. As shown in FIG. 5, a physical storage area indicated by an address sub-space 1 is used to store KVs generated by the processing sub-module 1, and a physical storage area indicated by an address sub-space 2 is used to store KVs generated by the processing sub-module 2.

In a process in which the AI model performs inference based on the inference result 1, each of the M processing sub-modules may generate a corresponding KV for the inference result 1, and the KV generated by each processing sub-module may be represented by using a corresponding vector matrix. For ease of differentiation, for the KV generated by each processing sub-module in the 1^{st} inference process, a K₁ and a V₁ are used for description below, and KVs generated by different processing sub-modules are different. In this way, as shown in FIG. 4, after each processing sub-module generates the K₁ and the V₁, the AI model inference apparatus may store, into the first physical storage area based on the first virtual address space, the K₁ and the V₁ that are generated by each of the M processing sub-modules. Specifically, the K₁ and the V₁ that are generated by each processing sub-module are stored in a physical storage area indicated by one address sub-space. Then, the AI model inference apparatus may update the metadata of the target virtual address space, for example, update a remaining quantity of KVs that can be stored.

S404: The AI model inference apparatus concatenates the inference result 1 and the inference result 2 to obtain a concatenation result, uses the concatenation result as a new input of the AI model, and performs a 3^{rd} inference process on the concatenation result by using the AI model, to obtain an inference result 3.

Similar to a process in which the AI model performs the 2^{nd} inference, the AI model inference apparatus may continue to use the allocated first physical storage area, to store K₂s and V₂s that are newly generated for the inference result 2 by N processing sub-modules, and update the quantity, of remaining KVs that can be stored, that is in the metadata.

By analogy, the AI model inference apparatus may complete N inferences (N is a positive integer) of the AI model in the foregoing manner, to obtain an inference result N. Details are not described herein. In this case, the KVs stored in the first physical storage area include new KVs generated in the processes of the 2^{nd} inference to the N^{th} inference, that is, K₁s to K_{N-1}s and V₁s to V_{N-1}s.

Because the size of the first physical storage area is small, after K_{N-1}s and V_{N-1}s that are newly generated by the M processing sub-modules are stored, a new KV cannot continue to be stored. In this case, the AI model inference apparatus may dynamically allocate a new physical storage area to the M processing sub-modules, to store KVs generated by the M processing sub-modules in subsequent inference processes. The following continues to describe processes in which the AI model inference apparatus continues to perform, by using the AI model, an (N+1)^{th} inference and subsequent inferences after the first physical storage area is completely used.

S405: The AI model inference apparatus concatenates the inference result 1 and the inference result N to obtain a concatenation result, uses the concatenation result as a new input of the AI model, and performs the (N+1)^{th} inference process on the concatenation result by using the AI model, to obtain an inference result (N+1).

During specific implementation, before the AI model performs the (N+1)^{th} inference, the AI model inference apparatus may determine, based on the metadata corresponding to the target virtual address space, whether the remaining quantity of KVs that can be stored is 0. When it is determined that the remaining quantity of KVs that can be stored is 0, it indicates that the first physical storage area has been completely used. In this case, as shown in FIG. 4, the AI model inference apparatus may select an available second physical storage area from the storage resource pool, and establish a mapping between the second physical storage area and a second virtual address space that is in the target virtual address space, to allocate the new physical storage area to the M processing sub-modules. The first virtual address space and the second virtual address space are contiguous.

In this embodiment, in the target virtual address space, a contiguous segment of virtual address space may be used to store a plurality of KVs generated by the processing sub-modules. Therefore, after dynamically allocating the second physical storage area to the M processing sub-modules, the AI model inference apparatus may evenly re-divide the virtual address space (that is, the first virtual address space and the second virtual address space that are contiguous) that has been mapped to the physical storage areas into the M address sub-spaces, and store, in the physical storage areas indicated by the M address sub-spaces obtained through re-division, the KVs generated by each of the M processing sub-module.

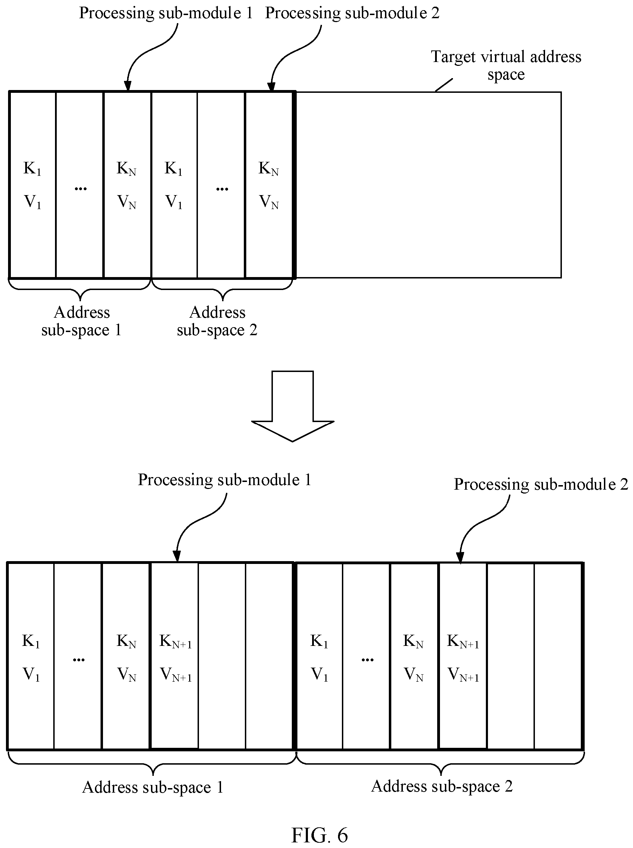

For example, assuming that a value of M is 2, before the second physical storage area is allocated, an address sub-space used for storing KVs generated by each processing sub-module is shown in an upper part of FIG. 6. After the second physical storage area is allocated, the AI model inference apparatus may evenly re-divide the virtual address space that has been mapped to the physical storage areas into two address sub-spaces, as shown in a lower part of FIG. 6, and contiguous virtual addresses are still used to store KVs generated by a same processing sub-module. In this process, the AI model inference apparatus may migrate KVs generated by a processing sub-module 2 that are originally stored in an address sub-space 1 to a physical storage area indicated by an address sub-space 2. Then, the AI model inference apparatus may use an unused physical storage area indicated by the address sub-space 1 to store a KV newly generated by the processing sub-module 1, and use a physical storage area indicated by the address sub-space 2 to store a KV newly generated by the processing sub-module 2, for example, K_{N}s and V_{N}s shown in FIG. 6.

After storing the KVs newly generated by the M processing sub-modules, the AI model inference apparatus may update the metadata of the target virtual address space, including updating a list of physical storage areas that have been mapped, the remaining quantity of KVs that can be stored, and the like.

Similarly, in processes of an (N+2)^{th} inference to a P^{th} inference on the AI model, the AI model inference apparatus may continue to use the physical storage areas indicated by the address sub-space obtained through division, to store KVs newly generated by each processing sub-module. In addition, when a physical storage area indicated by each address sub-space is completely used, the AI model inference apparatus may continue to allocate a new physical storage area to the M processing sub-modules in the foregoing manner of dynamically allocating the second physical storage area to the M processing sub-modules, evenly re-divide a virtual address space that has been mapped to physical storage areas, and store newly generated KVs in the physical storage areas indicated by an address sub-space obtained through even division, until the AI model completes the inference task.

S406: The AI model inference apparatus determines whether an inference result P is an end-of-sentence character, and when determining that the inference result P is the end-of-sentence character, determines that execution of the inference task is completed, and outputs the inference result 1 to an inference result (P-1).

In this way, in a process in which the AI model executes the inference task, the AI model inference apparatus may dynamically allocate a physical storage area to the M processing sub-modules. Therefore, utilization of a physical storage resource is improved, and a quantity of fragments of the physical storage resource is reduced. In addition, KVs generated by each processing sub-module may be stored in a physical storage area indicated by contiguous virtual addresses. This can improve generalization for operators in a processing sub-module, and improve computational efficiency of the processing sub-module.

When the AI model inference apparatus invokes an interface to read KVs separately generated by a plurality of processing sub-modules, because the plurality of processing sub-modules may share a same physical storage area to store the KVs, the AI model inference apparatus needs to invoke the interface only once to obtain the KVs that are separately generated by the plurality of processing sub-modules and that are in the physical storage area. This can effectively reduce a quantity of interface invocations performed by the AI model inference apparatus, that is, reduce overheads generated when the AI model inference apparatus invokes an interface.

It should be noted that another appropriate step combination that can be figured out by a person skilled in the art based on the content described above also falls within the protection scope of this application. In addition, a person skilled in the art should also appreciate that embodiments described in this specification all belong to preferred embodiments, and the involved actions are not necessarily mandatory to this application.

The foregoing describes the AI model inference method provided in embodiments of this application with reference to FIG. 1 to FIG. 6. The following describes a structure of an AI model inference apparatus and a structure of a compute device provided in embodiments of this application with reference to the accompanying drawings.

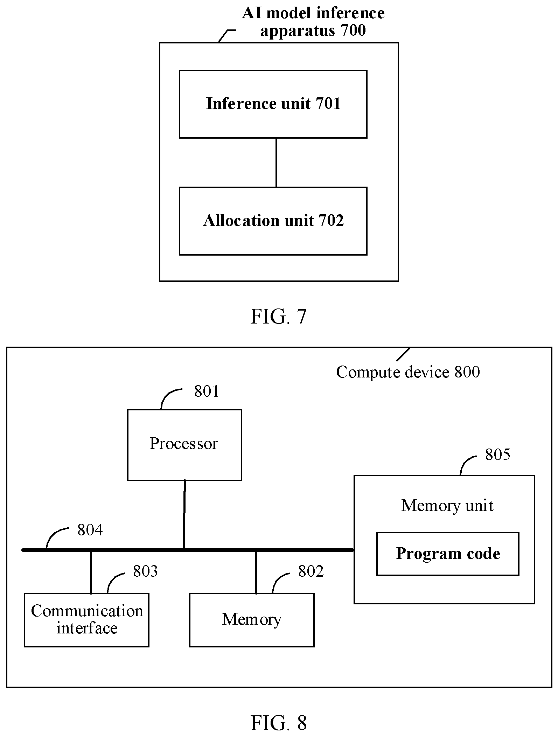

FIG. 7 is a diagram of a structure of a processor. The AI model inference apparatus 700 includes:
an inference unit 701, configured to: obtain input data; and perform iterative inference by using the AI model and the input data, to obtain an inference result, where the AI model includes a processing module, the processing module corresponds to a first physical storage area indicated by a first virtual address space, and the first physical storage area is used to store a key value KV generated by the processing module when the AI model performs iterative inference; and the processing module performs data processing in an N^{th} inference process, to generate a KV in the N^{th} inference process; and
an allocation unit 702, configured to: when the first physical storage area is insufficient to continue to store the KV generated by the processing module in the N^{th} inference process, allocate, to the processing module, a second physical storage area indicated by a second virtual address space, where the second virtual address space and the first virtual address space are contiguous, and N is a positive integer; and
the inference unit 701, further configured to store, in the second physical storage area based on the second virtual address space, the KV generated in the N^{th} inference process.

In a possible implementation, the allocation unit 702 is further configured to allocate a target virtual address space of a fixed size to the processing module before iterative inference is performed by using the AI model, where the target virtual address space includes the first virtual address space and the second virtual address space that are contiguous in virtual addresses; and

The allocation unit 702 is specifically configured to:
determine the second physical storage area; and
establish a mapping between the second virtual address space and the second physical storage area.

In a possible implementation, the allocation unit 702 is specifically configured to select the second physical storage area from a plurality of available physical storage areas included in a storage resource pool, where all the plurality of physical storage areas have a same size.

In a possible implementation, the allocation unit 702 is further configured to: after the AI model completes iterative inference, release the plurality of physical storage areas allocated to the processing module in a process in which the AI model performs iterative inference, where the plurality of physical storage areas include the first physical storage area and the second physical storage area.

In a possible implementation, the allocation unit 702 is further configured to:
determine whether a virtual address used to store the KV generated by the processing module in the N^{th} inference process is mapped to a physical address, and when the virtual address is not mapped to the physical address, determine that the first physical storage area is insufficient to continue to store the KV generated in the N^{th} inference process; or
detect whether the first physical storage area has a remaining storage space, and when the first physical storage area does not have the remaining storage space, determine that the first physical storage area is insufficient to continue to store the KV generated in the N^{th} inference process; or
detect whether a remaining quantity of KVs that can be stored in the first physical storage area is zero, and when the quantity of the remaining KVs that can be stored is zero, determine that the first physical storage area is insufficient to continue to store the KV generated in the N^{th} inference process.

In a possible implementation, the processing module includes M processing sub-modules, the first virtual address space includes M first address sub-spaces, a physical storage area indicated by each of the M first address sub-spaces is used to store a KV generated by one processing sub-module, physical storage areas indicated by different first address sub-spaces are used to store KVs generated by different processing sub-modules, and M is a positive integer greater than 1.

In a possible implementation, the allocation unit 702 is further configured to: after allocating the second physical storage area to the processing module, evenly divide the first virtual address space and the second virtual address space into M second address sub-spaces, where each of the M second address sub-spaces is used to store a KV generated by one processing sub-module, and different second address sub-spaces are used to store KVs generated by different processing sub-modules.

In a possible implementation, the processing module includes a plurality of network layers of the AI model; or
the processing module includes one network layer of the AI model; or
the processing module includes a plurality of attention heads that are in one network in the AI model; or
the processing module includes one attention head that is in the AI model.

The AI model inference apparatus 700 shown in FIG. 7 corresponds to the AI model inference apparatus in the embodiments shown in FIG. 2 and FIG. 4. Therefore, for a specific implementation of the AI model inference apparatus 700 shown in FIG. 7 and a technical effect thereof, refer to related descriptions in the embodiments shown in FIG. 2 and FIG. 4. Details are not described herein again.

FIG. 8 is a diagram of a hardware structure of a compute device 800 according to this application. The compute device 800 may implement, for example, the AI model inference apparatus in the embodiments shown in FIG. 2 and FIG. 4. As shown in FIG. 8, the compute device 800 includes a processor 801, a memory 802, and a communication interface 803. The processor 801, the memory 802, and the communication interface 803 communicate with each other through a bus 804, or may implement communication through wireless transmission or by another means. The memory 802 is configured to store instructions. The processor 801 may execute the instructions stored in the memory 802. Further, the compute device 800 may further include a memory unit 805, and the memory unit 805 may be connected to the processor 801, the storage medium 802, and the communication interface 803 through the bus 804. The memory 802 stores program code, and the processor 801 may invoke the program code stored in the memory 802 to perform the following operations:
obtaining input data;
performing iterative inference by using the AI model and the input data, to obtain an inference result, where the AI model includes a processing module, the processing module corresponds to a first physical storage area indicated by a first virtual address space, and the first physical storage area is used to store a key value KV generated by the processing module when the AI model performs iterative inference;
performing, by the processing module, data processing in an N^{th} inference process, to generate a KV in the N^{th} inference process;
when the first physical storage area is insufficient to continue to store the KV generated by the processing module in the N^{th} inference process, allocating, to the processing module, a second physical storage area indicated by a second virtual address space, where the second virtual address space and the first virtual address space are contiguous, and N is a positive integer; and
storing, in the second physical storage area based on the second virtual address space, the KV generated in the N^{th} inference process.

It should be understood that in this embodiment, the processor 801 may be a CPU, or the processor 801 may be another general-purpose processor, a digital signal processor (DSP), an application-specific integrated circuit (ASIC), a field programmable gate array (FPGA), another programmable logic device, a discrete gate, a transistor logic device, a discrete device component, or the like. The general-purpose processor may be a microprocessor or any conventional processor or the like.

The memory 802 may include a read-only memory and a random access memory, and provide instructions and data for the processor 801. The memory 802 may further include a nonvolatile random access memory.

The memory 802 may be a volatile memory or a nonvolatile memory, or may include both a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through an example description rather than a limitative description, many forms of RAMs may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

The communication interface 803 is configured to communicate with another device connected to the compute device 800. In addition to a data bus, the bus 804 may further include a power bus, a control bus, a status signal bus, and the like. However, for clear description, various types of buses in the figure are uniformly marked as the bus 804.

It should be understood that the compute device 800 according to this embodiment of this application may correspond to the AI model inference apparatus 700 in embodiments of this application, and may correspond to the methods performed by the AI model inference apparatuses in the methods shown in FIG. 2 and FIG. 4 in embodiments of this application. The foregoing and another operation and/or function implemented by the compute device 800 are respectively used to implement the procedures of the corresponding methods in FIG. 2 and FIG. 4. For brevity, details are not described herein again.

An embodiment of this application further provides a computer-readable storage medium. The computer-readable storage medium may be any usable medium that can be stored by a compute device, or a data storage device, such as a data center, including one or more usable media. The usable medium may be a magnetic medium (for example, a floppy disk, a hard disk, or a magnetic tape), an optical medium (for example, a DVD), a semiconductor medium (for example, a solid-state drive), or the like. The computer-readable storage medium includes instructions. The instructions indicate a compute device to perform the foregoing AI model inference methods.

An embodiment of this application further provides a computer program product. The computer program product includes one or more computer instructions. When the computer instructions are loaded and executed on a compute device, the procedure or functions according to embodiments of this application are all or partially generated.

The computer instructions may be stored in a computer-readable storage medium or may be transmitted from a computer-readable storage medium to another computer-readable storage medium. For example, the computer instructions may be transmitted from a website, computer, or data center to another website, computer, or data center in a wired (for example, a coaxial cable, an optical fiber, or a digital subscriber line (DSL)) or wireless (for example, infrared, radio, or microwave) manner.

The computer program product may be a software installation package. When any method of the foregoing AI model inference method needs to be used, the computer program product may be downloaded and executed on the compute device.

All or a part of the foregoing embodiments may be implemented through software, hardware, firmware, or any combination thereof. When software is used to implement the foregoing embodiments, all or a part of the foregoing embodiments may be implemented in a form of a computer program product. The computer program product includes one or more computer instructions. When the computer program instructions are loaded or executed on a computer, the procedure or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium that can be accessed by a computer, or a data storage device, for example, a server or a data center, integrating one or more usable media. The usable medium may be a magnetic medium (for example, a floppy disk, a hard disk, or a magnetic tape), an optical medium (for example, a DVD), or a semiconductor medium. The semiconductor medium may be a solid-state drive.

Terms used in the foregoing embodiments are merely intended to describe specific embodiments, but are not intended to limit this application. Terms "one", "a", "the", "the foregoing", "this", and "the one" of singular forms used in this specification and the appended claims of this application are also intended to include a form like "one or more", unless otherwise specified in the context clearly. It should be further understood that, in embodiments of this application, "one or more" means one, two, or more, and a character "/" generally indicates an "or" relationship between associated objects. In embodiments of this application, "simultaneously" means a case in a same time period, including a case at a same moment. In the specification, claims, and accompanying drawings of this application, the terms "first", "second", and the like are intended to distinguish between similar objects but do not necessarily indicate a specific order or sequence. It should be understood that the terms used in such a way are interchangeable in proper circumstances. This is merely a differentiation manner that is used when objects having a same attribute are described in embodiments of this application.

Referring to "one embodiment", "some embodiments", or the like described in this specification means that one or more embodiments of this application include a specific feature, structure, or characteristic described with reference to embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. Terms "include", "comprise", "have", and their variants all mean "include but are not limited to", unless otherwise specifically emphasized in another manner.

The foregoing descriptions are merely specific implementations of this application, but are not intended to limit the protection scope of this application. Any equivalent modification or replacement readily figured out by a person skilled in the art within the technical scope disclosed in this application shall fall within the protection scope of this application. Therefore, the protection scope of this application shall be subject to the protection scope of the claims.

## Claims

1. An artificial intelligence AI model inference method, wherein the method comprises:
obtaining input data;
performing iterative inference by using the AI model and the input data, to obtain an inference result, wherein the AI model comprises a processing module, the processing module corresponds to a first physical storage area indicated by a first virtual address space, and the first physical storage area is used to store a key value KV generated by the processing module when the AI model performs iterative inference;
performing, by the processing module, data processing in an N^{th} inference process, to generate a KV in the N^{th} inference process;
when the first physical storage area is insufficient to continue to store the KV generated by the processing module in the N^{th} inference process, allocating, to the processing module, a second physical storage area indicated by a second virtual address space, wherein the second virtual address space and the first virtual address space are contiguous, and N is a positive integer; and
storing, in the second physical storage area based on the second virtual address space, the KV generated by the processing module in the N^{th} inference process.

2. The method according to claim 1, wherein the method further comprises:
allocating a target virtual address space of a fixed size to the processing module before performing iterative inference by using the AI model, wherein the target virtual address space comprises the first virtual address space and the second virtual address space that are contiguous in virtual addresses; and
the allocating, to the processing module, the second physical storage area indicated by the second virtual address space comprises:
determining the second physical storage area; and
establishing a mapping between the second virtual address space and the second physical storage area.

3. The method according to claim 2, wherein the determining the second physical storage area comprises:
selecting the second physical storage area from a plurality of available physical storage areas comprised in a storage resource pool, wherein all the plurality of physical storage areas have a same size.

4. The method according to claim 2 or 3, wherein the method further comprises:
after the AI model completes iterative inference, releasing the plurality of physical storage areas allocated to the processing module in a process in which the AI model performs iterative inference, wherein the plurality of physical storage areas comprise the first physical storage area and the second physical storage area.

5. The method according to any one of claims 1 to 4, wherein the method further comprises:
determining whether a virtual address used to store the KV generated by the processing module in the N^{th} inference process is mapped to a physical address, and when the virtual address is not mapped to the physical address, determining that the first physical storage area is insufficient to continue to store the KV generated in the N^{th} inference process; or
detecting whether the first physical storage area has a remaining storage space, and when the first physical storage area does not have the remaining storage space, determining that the first physical storage area is insufficient to continue to store the KV generated in the N^{th} inference process; or
detecting whether a remaining quantity of KVs that can be stored in the first physical storage area is zero, and when the quantity of the remaining KVs that can be stored is zero, determining that the first physical storage area is insufficient to continue to store the KV generated in the N^{th} inference process.

6. The method according to any one of claims 1 to 4, wherein the processing module comprises M processing sub-modules, the first virtual address space comprises M first address sub-spaces, a physical storage area indicated by each of the M first address sub-spaces is used to store a KV generated by one processing sub-module, physical storage areas indicated by different first address sub-spaces are used to store KVs generated by different processing sub-modules, and M is a positive integer greater than 1.

7. The method according to claim 6, wherein after allocating the second physical storage area to the processing module, the method further comprises:
evenly dividing the first virtual address space and the second virtual address space into M second address sub-spaces, wherein each of the M second address sub-spaces is used to store a KV generated by one processing sub-module, and different second address sub-spaces are used to store KVs generated by different processing sub-modules.

8. The method according to any one of claims 1 to 7, wherein the processing module comprises a plurality of network layers of the AI model; or
the processing module comprises one network layer of the AI model; or
the processing module comprises a plurality of attention heads that are in one network in the AI model; or
the processing module comprises one attention head that is in the AI model.

9. An artificial intelligence AI model inference apparatus, wherein the apparatus comprises:
an inference unit, configured to: obtain input data; and perform iterative inference by using the AI model and the input data, to obtain an inference result, wherein the AI model comprises a processing module, the processing module corresponds to a first physical storage area indicated by a first virtual address space, and the first physical storage area is used to store a key value KV generated by the processing module when the AI model performs iterative inference; and the processing module performs data processing in an N^{th} inference process, to generate a KV in the N^{th} inference process; and
an allocation unit, configured to: when the first physical storage area is insufficient to continue to store the KV generated by the processing module in the N^{th} inference process, allocate, to the processing module, a second physical storage area indicated by a second virtual address space, wherein the second virtual address space and the first virtual address space are contiguous, and N is a positive integer; and
the inference unit is further configured to store, in the second physical storage area based on the second virtual address space, the KV generated by the processing module in the N^{th} inference process.

10. The apparatus according to claim 9, wherein
the allocation unit is further configured to allocate a target virtual address space of a fixed size to the processing module before iterative inference is performed by using the AI model, wherein the target virtual address space comprises the first virtual address space and the second virtual address space that are contiguous in virtual addresses; and
the allocation unit is configured to:
determine the second physical storage area; and
establish a mapping between the second virtual address space and the second physical storage area.

11. The apparatus according to claim 10, wherein the allocation unit is configured to select the second physical storage area from a plurality of available physical storage areas comprised in a storage resource pool, wherein all the plurality of physical storage areas have a same size.

12. The apparatus according to claim 10 or 11, wherein
the allocation unit is further configured to: after the AI model completes iterative inference, release the plurality of physical storage areas allocated to the processing module in a process in which the AI model performs iterative inference, wherein the plurality of physical storage areas comprise the first physical storage area and the second physical storage area.

13. The apparatus according to any one of claims 9 to 12, wherein the allocation unit is further configured to:
determine whether a virtual address used to store the KV generated by the processing module in the N^{th} inference process is mapped to a physical address, and when the virtual address is not mapped to the physical address, determine that the first physical storage area is insufficient to continue to store the KV generated in the N^{th} inference process; or
detect whether the first physical storage area has a remaining storage space, and when the first physical storage area does not have the remaining storage space, determine that the first physical storage area is insufficient to continue to store the KV generated in the N^{th} inference process; or
detect whether a remaining quantity of KVs that can be stored in the first physical storage area is zero, and when the quantity of the remaining KVs that can be stored is zero, determine that the first physical storage area is insufficient to continue to store the KV generated in the N^{th} inference process.

14. The apparatus according to any one of claims 9 to 12, wherein the processing module comprises M processing sub-modules, the first virtual address space comprises M first address sub-spaces, a physical storage area indicated by each of the M first address sub-spaces is used to store a KV generated by one processing sub-module, physical storage areas indicated by different first address sub-spaces are used to store KVs generated by different processing sub-modules, and M is a positive integer greater than 1.

15. The apparatus according to claim 14, wherein the allocation unit is further configured to:
after allocating the second physical storage area to the processing module, evenly divide the first virtual address space and the second virtual address space into M second address sub-spaces, wherein each of the M second address sub-spaces is used to store a KV generated by one processing sub-module, and different second address sub-spaces are used to store KVs generated by different processing sub-modules.

16. The apparatus according to any one of claims 9 to 15, wherein the processing module comprises a plurality of network layers of the AI model; or
the processing module comprises one network layer of the AI model; or
the processing module comprises a plurality of attention heads that are in one network in the AI model; or
the processing module comprises one attention head that is in the AI model.

17. A compute device, wherein the compute device comprises a processor and a memory; and
the memory is configured to store instructions, and the processor executes the instructions stored in the memory, to cause the compute device to perform the method according to any one of claims 1 to 8.

18. A computer-readable storage medium, comprising instructions, wherein when the instructions are run on a compute device, the compute device is caused to perform the method according to any one of claims 1 to 8.

19. A computer program product comprising instructions, wherein when the instructions are run on at least one compute device, the at least one compute device is caused to perform the method according to any one of claims 1 to 8.
